(19) Europäisches Patentamt
European Patent Office
Office européen des brevets

(11) **EP 1 831 663 B1**

(12) **FASCICULE DE BREVET EUROPEEN**

(45) Date de publication et mention
de la délivrance du brevet:
**10.09.2008 Bulletin 2008/37**

(51) Int Cl.:
***G01L 9/00*** *(2006.01)*

(21) Numéro de dépôt: **05823948.4**

(22) Date de dépôt: **20.12.2005**

(86) Numéro de dépôt international:
**PCT/EP2005/056961**

(87) Numéro de publication internationale:
**WO 2006/069937 (06.07.2006 Gazette 2006/27)**

(54) **DISPOSITIF DE MESURE A RESONATEUR ET PROCEDE METTANT EN OEUVRE LE DISPOSITIF**

RESONATORMESSEINRICHTUNG UND VERFAHREN DAMIT

RESONATOR MEASURING DEVICE AND METHOD INVOLVING SAME

(84) Etats contractants désignés:
**CH DE GB LI**

(30) Priorité: **27.12.2004 FR 0413965**
**20.01.2005 FR 0500591**

(43) Date de publication de la demande:
**12.09.2007 Bulletin 2007/37**

(73) Titulaire: **THALES**
**92526 Neuilly sur Seine (FR)**

(72) Inventeurs:
• **LEVERRIER, Bertrand**
**F-26120 Montelier (FR)**
• **LEFORT, Olivier**
**F-26000 Valence (FR)**

(74) Mandataire: **Collet, Alain et al**
**Marks & Clerk France**
**31-33 Avenue Aristide Briand**
**94117 Arcueil Cedex (FR)**

(56) Documents cités:
**US-A- 5 009 108      US-A- 5 165 289**
**US-A- 5 546 810      US-A- 6 085 594**

• **BYEUNGLEUL LEE ET AL: "A study on wafer level vacuum packaging for MEMS devices" JOURNAL OF MICROMECHANICS & MICROENGINEERING, INSTITUTE OF PHYSICS PUBLISHING, BRISTOL, GB, vol. 13, no. 5, septembre 2003 (2003-09), pages 663-669, XP002359219 ISSN: 0960-1317**
• **PARSONS P ET AL: "RESONANT SENSORS FOR HIGH ACCURACY PRESSURE MEASUREMENT USING SILICON TECHNOLOGY" PROCEEDINGS OF THE NATIONAL AEROSPACE AND ELECTRONICS CONFERENCE. (NAECON). DAYTON, MAY 18 - 22, 1992, NEW YORK, IEEE, US, vol. VOL. 1 CONF. 44, 18 mai 1992 (1992-05-18), pages 349-355, XP000339598 ISBN: 0-7803-0652-X**

**Description**

L'invention concerne un dispositif et un procédé permettant la détection de défaut d'un dispositif de mesure comportant un résonateur et des moyens de mesure d'une fréquence de résonance du résonateur. Le dispositif de mesure comporte par exemple un capteur de pression de fluide. L'invention trouve une utilité particulière en aéronautique où les mesures de pression sont primordiales pour la conduite de vol d'un aéronef. En effet, l'altitude d'un niveau de vol requis pour un aéronef est déterminée par la pression statique de l'air entourant l'aéronef. Par ailleurs, le trafic aérien augmentant, les autorités de contrôle du trafic cherchent à réduire l'écart entre deux niveaux de vol voisins. La détection d'un défaut d'un capteur de pression est essentielle pour garantir la sécurité du trafic aérien.

L'invention peut également être mise en oeuvre pour d'autres dispositifs mettant en oeuvre un résonateur comme par exemple dans un accéléromètre tel que décrit dans la demande de brevet français FR 2 848 298, un gyromètre tel que décrit dans la demande de brevet français FR 2 834 055 ou encore dans une base de temps. La suite de la description ne sera faite qu'en référence à un capteur de pression d'air sans bien sûr limiter l'invention.

Pour mesurer la pression de l'air ambiant on utilise couramment des capteurs de pression comportant une chambre maintenue à une pression de référence généralement proche du vide. Un exemple de ce type de capteur est décrit dans la demande de brevet français FR 2 687 783. Le capteur de pression mesure une différence de pression entre la chambre et l'air. La garantie de la précision dans la mesure de pression dépend essentiellement du maintien du vide régnant à l'intérieur de la chambre pendant toute la durée de vie d'un capteur, ou tout au moins entre deux calibrations du capteur de pression. Plusieurs phénomènes peuvent dégrader le vide régnant dans la chambre, comme notamment des fuites pouvant se produire aux jonctions de différents composants des parois de la chambre ou encore le dégazage des parois ou des composants situés dans la chambre.

Le capteur de pression décrit dans la demande de brevet français FR 2 687 783 comporte un résonateur dont une extrémité est soumise à un effort fonction de la différence de pression entre l'intérieur de la chambre et l'air ambiant. Le principe de la mesure de pression consiste à mesurer la fréquence de résonance du résonateur.

On a constaté par ailleurs qu'à pression constante de l'air, la température ambiante influait sur la valeur de la fréquence de résonance. Il est possible d'adjoindre au capteur de pression un capteur de température. Lors d'une phase de calibration on établit une fonction combinant la température mesurée et la fréquence de résonance pour déterminer la pression. Cette fonction peut être établie de façon empirique. Cette correction ne permet pas de tenir compte d'une éventuelle modification de la pression dans la chambre. A ce jour, seule une recalibration du dispositif de mesure de pression permet de connaître une telle modification. Le document US 6085594 décrit un capteur de pression dans lequel c'est la fréquence de résonance qui donne la pression. Ce même document décrit le fait que le facteur de qualité à la fréquence de résonance est utilisé pour déterminer la pression.

L'invention a pour but d'améliorer la connaissance du niveau de précision du capteur de pression durant son utilisation et d'éviter l'obligation de recalibrer périodiquement le capteur de façon préventive. Un autre but de l'invention est de maintenir un niveau de précision de l'ordre de 0,1 hPa.

A cet effet, l'invention a pour objet un dispositif de mesure comportant un résonateur et des moyens de mesure d'une fréquence de résonance du résonateur, caractérisé en ce qu'il comporte des moyens délivrant une information représentative du coefficient de qualité du résonateur à la fréquence de résonance, l'information permettant de détecter un défaut du dispositif.

L'invention a également pour objet un procédé d'utilisation d'un dispositif de mesure de pression d'air comportant un capteur de pression et une chambre maintenue à une pression de référence, le capteur de pression mesurant une différence de pression entre la chambre et l'air, le capteur comportant un résonateur excité par une oscillation contrôlée par des moyens de contrôle automatique d'amplitude caractérisé en ce que le dispositif comporte des moyens de détection d'une variation de pression dans la chambre et en ce que le procédé consiste à comparer un premier gain du contrôle automatique de l'amplitude de l'excitation mesuré lors de la mesure de pression avec un second gain du contrôle automatique de l'amplitude de l'excitation calculé à la fréquence de l'excitation mesurée à partir de paramètres définis lors d'une calibration du dispositif de façon à détecter un défaut du dispositif lorsque la différence entre les deux gains est supérieure à une valeur donnée.

L'invention sera mieux comprise et d'autres avantages apparaîtront à la lecture de la description détaillée d'un mode de réalisation donné à titre d'exemple, description illustrée par le dessin joint dans lequel :

- la figure 1 représente sous forme de schéma bloc un exemple de dispositif conforme à l'invention;
- la figure 2 représente un exemple de réalisation d'une partie du schéma de la figure 1.

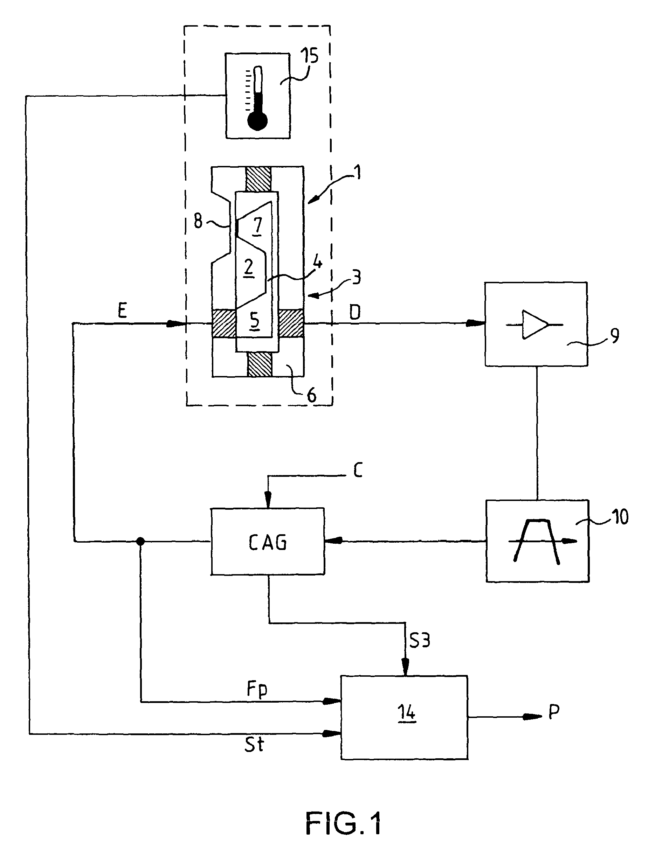

La figure 1 représente un dispositif de mesure de pression d'air comportant un capteur de pression 1 et une chambre 2 maintenue à une pression de référence, en générale proche du vide. Le capteur de pression 1 mesure une différence de pression entre la chambre 2 et l'air entourant le capteur de pression 1.

Avantageusement, le dispositif comporte un résonateur 3 et des moyens de mesure d'une fréquence de résonance du résonateur 3. Le résonateur 3 est par exemple réalisé au moyen d'une lame de silicium 4 pouvant entrer en résonance sous l'effet d'un signal d'excitation électrique E. La lame de silicium 4 est situé dans la chambre 2. La lame de silicium 4 est encastrée à l'une de ses extrémités 5 dans un corps 6 du résonateur 3 et à l'autre de ses extrémités 7 sur une paroi 8 amincie de la chambre 2. La paroi 8 est soumise sur une de ses faces à la pression de l'air, pression à mesurer, et sur l'autre de ses faces à la pression de la chambre 2. La paroi 8 se déforme en fonction de la différence de pression entre la chambre 2 et l'air. Cette déformation de la paroi 8 entraîne une contrainte dans la lame de silicium 4. La contrainte évolue en fonction de la différence de pression entre l'air et la chambre 2. La fréquence de résonance de la lame de silicium 4 est donc également fonction de la différence de pression entre l'air et la chambre 2. Une explication plus détaillée de la réalisation de cet exemple de résonateur peut être obtenue en lisant la demande de brevet français FR 2 687 783. Il est bien entendu possible d'utiliser un autre type de capteur de pression mettant en oeuvre un résonateur et dans lequel le résonateur est situé hors d'une chambre maintenue à une pression de référence.

La détection de la résonance se fait par effet capacitif entre la lame de silicium 4 et le corps 6 du résonateur 3 au moyen d'un signal électrique D prélevé au niveau du corps 6 du résonateur 3. Le signal électrique D est amplifié par un amplificateur 9 puis filtré au moyen d'un filtre passe bande 10 pour ne conserver que la fréquence de résonance et être délivré à des moyens de contrôle automatique de l'amplitude du signal d'excitation E, moyens communément appelés contrôle automatique de gain et portant le repère CAG sur la figure 1. Le contrôle automatique de gain est piloté par une consigne C. Le contrôle automatique de gain délivre le signal d'excitation E. le signal d'excitation E forme le signal Fp utilisé par un calculateur 14 pour déterminer la pression de l'air.

Le dispositif comporte en outre des moyens 15 de mesure de la température de l'air. Les moyens 15 comportent par exemple une résistance à coefficient de température négatif. Les moyens 15 délivrent un signal St au calculateur 14 pour corriger la mesure de pression de l'air. Cette correction est par exemple calculée en fonction du signal St et du signal Fp au moyen d'une fonction polynomiale définie lors d'une calibration du dispositif. Cette calibration est effectuée à l'aide d'une campagne de mesures de pression réalisées à des températures différentes. La fonction polynomiale est par exemple de la forme :

$$P = A0 + A1.Fp + A2.St + A3.Fp.St + A4.\ Fp^2.St + A5\ Fp.St^2 \ldots$$

où P représente la pression de l'air et où Ai représentent des constantes. On a constaté qu'une fonction polynomiale du cinquième ordre permet d'obtenir une précision suffisante pour la valeur de la pression P.

Selon l'invention, le dispositif comporte des moyens de détection d'une variation de pression dans la chambre 2. Ces moyens délivrent avantageusement une information représentative du coefficient de qualité du résonateur à la fréquence de résonance, par exemple sous forme d'un gain S3 du contrôle automatique de gain délivré au calculateur 14 pour détecter un défaut du dispositif. Par ailleurs, lors de la calibration, on a mesuré le signal S3 pour chaque mesure de pression effectuée. Les mesures faites lors de la calibration permettent de calculer, pour toute mesure ultérieure de pression, une valeur que devrait prendre le signal S3 si la pression de la chambre restait inchangée. Comme précédemment, on a constaté que le signal S3 est fonction des signaux Fp et St et que cette fonction peut être approchée au moyen d'une fonction polynomiale.

Pour détecter un défaut du dispositif, un procédé consiste à comparer un premier signal S3 mesuré lors de la mesure de pression avec un second signal S3 calculé à partir de paramètres définis lors de la calibration du dispositif et en fonction des signaux Fp et St mesurés. Le dispositif est alors déclaré en défaut si la différence entre le signal S3 mesuré et le signal S3 calculé est supérieure à une valeur donnée. La comparaison et les différents calculs sont effectués par le calculateur 14.

Avantageusement, il est possible de corriger la mesure de différence de pression entre la chambre 2 et l'air en fonction de la différence entre les deux signaux S3. On calcule par exemple la pression P en fonction des signaux Fp, St et S3 mesuré. Ce calcul peut se faire au moyen d'une fonction dont les paramètres sont définis lors de la phase de calibration. La fonction est ici encore par exemple polynomiale. Ainsi, même si le capteur de pression 1 devait dériver, du fait d'une dérive de pression de la chambre 2, il est possible de compenser cette dérive en utilisant le gain S3 du contrôle automatique de l'amplitude du signal d'excitation E du résonateur 3.

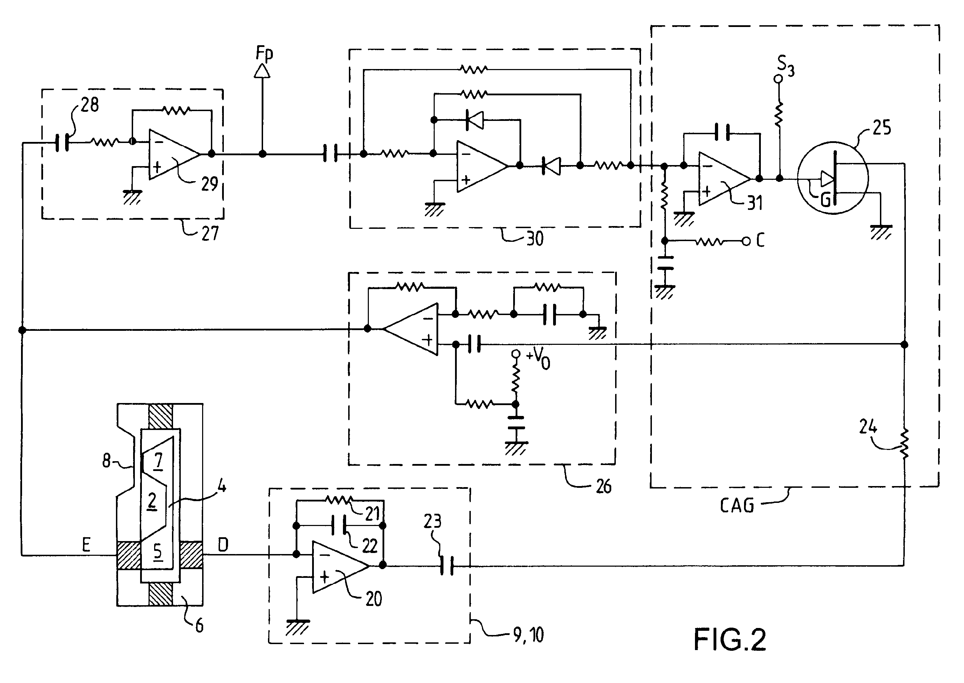

La figure 2 représente un exemple de réalisation d'une partie du schéma de la figure 1. Pour ne pas surcharger la figure 2, le calculateur 14 et les moyens 15 de mesure de la température de l'air n'ont pas été représentés.

L'amplificateur 9 et le filtre passe bande 10 sont formés autour d'un amplificateur opérationnel 20 attaqué sur son entrée inverseuse par le signal D. L'entrée non inverseuse de l'amplificateur opérationnel 20 est reliée à une masse. Une contre réaction de l'amplificateur opérationnel est formée par une résistance 21 et un condensateur 22 reliés en parallèle entre l'entrée inverseuse et la sortie de l'amplificateur opérationnel 20. Un condensateur 23 est relié à la sortie de l'amplificateur opérationnel 20 pour délivrer un signal au contrôle automatique de gain CAG qui peut affaiblir ce signal au moyen d'une résistance 24 et d'un transistor à effet de champ 25. Le signal ainsi affaibli est polarisé et mis en forme en traversant un circuit 26. la tension de polarisation est une tension $V_0$ fournie au circuit 26. La sortie du circuit 26 fournit le signal d'excitation E. Le signal Fp est formé à partir du signal E au travers d'un circuit 27 dont la fonction est de dépolariser le signal E au moyen d'un condensateur 28 et d'amplifier le signal E au moyen d'un amplificateur opérationnel 29. le signal Fp est ensuite redressé au moyen d'un circuit 30 pour être délivré au contrôle automatique de gain CAG. Le contrôle automatique de gain CAG est piloté par une consigne C. Le contrôle automatique de gain CAG comporte un premier étage d'intégration réalisé autour d'un amplificateur opérationnel 31 dont la sortie forme le signal S3 qui pilote une grille G du transistor à effet de champ 25.

**Revendications**

1. Dispositif de mesure comportant un résonateur (3) et des moyens de mesure d'une fréquence de résonance du résonateur (3), le principe de la mesure consistant à mesurer la fréquence de résonance, **caractérisé en ce qu'**il comporte des moyens délivrant une information (S3) représentative du coefficient de qualité du résonateur (3) à la fréquence de résonance, l'information (S3) permettant de détecter un défaut du dispositif.

2. Dispositif selon la revendication 1, **caractérisé en ce qu'**il comporte un capteur de pression (1 ) et une chambre (2) maintenue à une pression de référence, le capteur de pression (1) mesurant une différence de pression entre la chambre (2) et l'air.

3. Dispositif selon la revendication 2, **caractérisé en ce que** les moyens de mesure d'une fréquence de résonance du résonateur comporte des moyens de contrôle automatique (CAG) de l'amplitude d'une oscillation d'excitation (E) du résonateur (3), et **en ce qu'**un gain (S3) du contrôle automatique (CAG) de l'amplitude forme l'information représentative du coefficient de qualité du résonateur (3).

4. Dispositif selon l'une des revendications précédentes, **caractérisé en ce qu'**il comporte des moyens de mesure de température (15).

5. Dispositif selon l'une des revendications précédentes, **caractérisé en ce qu'**il comporte de moyens de correction (14) de la pression mesurée par le capteur de pression (1) en fonction d'une information provenant des moyens de détection (CAG) d'une variation de pression dans la chambre (2).

6. Dispositif selon la revendication 1, **caractérisé en ce qu'**il comporte des moyens de mesure d'accélération.

7. Procédé d'utilisation d'un dispositif de mesure de pression d'air comportant un capteur de pression (1) et une chambre (2) maintenue à une pression de référence, le capteur de pression (1) mesurant une différence de pression entre la chambre (2) et l'air, le capteur de pression (1) comportant un résonateur (3) excité par une oscillation (E) contrôlée par des moyens de contrôle automatique (CAG) d'amplitude, le principe de la mesure consistant à mesurer la fréquence de résonance, **caractérisé en ce que** le dispositif comporte des moyens de détection (CAG) d'une variation de pression dans la chambre (2) et **en ce que** le procédé consiste à comparer un premier gain (S3 mesuré) du contrôle automatique de l'amplitude de l'excitation mesuré lors de la mesure de pression avec un second gain (S3 calculé) du contrôle automatique de l'amplitude de l'excitation calculé à la fréquence de l'excitation mesurée à partir de paramètres définis lors d'une calibration du dispositif de façon à détecter un défaut du dispositif lorsque la différence entre les deux gains est supérieure à une valeur donnée.

8. Procédé selon la revendication 7, **caractérisé en ce que** le dispositif comporte des moyens de mesure de température (15) et **en ce que** le procédé consiste à calculer le second gain (S3 calculé) en fonction de la fréquence (Fp) de l'excitation (E) et de la température (St) mesurée lors de l'excitation.

9. Procédé selon l'une des revendications 7 bu 8, **caractérisé en ce qu'**il consiste à corriger la mesure de différence de pression entre la chambre (2) et l'air en fonction de la différence entre les deux gains.

**Claims**

1. Measurement device comprising a resonator (3) and means for measuring a resonant frequency of the resonator (3), the principle of the measurement consisting in measuring the resonant frequency, **characterized in that** it includes means delivering information ($S_3$) representative of the quality factor of the resonator (3) at the resonant

frequency, the information ($S_3$) allowing a fault in the device to be detected.

2. Device according to Claim 1, **characterized in that** it includes a pressure sensor (1) and a chamber (2) maintained at a reference pressure, the pressure sensor (1) measuring a pressure difference between the chamber (2) and the air.

3. Device according to Claim 2, **characterized in that** the means for measuring a resonant frequency of the resonator comprises automatic control means (AGC) for controlling the amplitude of an excitation oscillation (E) of the resonator (3), and **in that** a gain (S3) of the automatic amplitude control unit (AGC) forms the information representative of the quality factor of the resonator (3).

4. Device according to one of the preceding claims, **characterized in that** it includes temperature measurement means (15).

5. Device according to one of the preceding claims, **characterized in that** it includes means (14) for correcting the pressure measured by the pressure sensor (1) according to information coming from the means (AGC) for detecting a pressure change in the chamber (2).

6. Device according to Claim 1, **characterized in that** it includes acceleration measurement means.

7. Method of using an air pressure measurement device comprising a pressure sensor (1) and a chamber (2) maintained at a reference pressure, the pressure sensor (1) measuring a pressure difference between the chamber (2) and the air, the pressure sensor (1) comprising a resonator (3) excited by an oscillation (E) controlled by automatic amplitude control means (AGC), the principle of the measurement consisting in measuring the resonant frequency, **characterized in that** the device includes detection means (AGC) for detecting a pressure change in the chamber (2) and **in that** the method consists in comparing a first gain (measured gain S3) of the unit for automatically controlling the amplitude of the excitation, said gain being measured during the pressure measurement, with a second gain (calculated gain S3) of the unit for automatically controlling the amplitude of the excitation, said gain being calculated at the measured excitation frequency on the basis of parameters defined during a calibration of the device, so as to detect a fault in the device when the difference between the two gains is greater than a given value.

8. Method according to Claim 7, **characterized in that** the device includes temperature measurement means (15) and **in that** the method consists in calculating the second gain (calculated gain $S_3$) as a function of the frequency ($F_p$) of the excitation (E) and of the temperature ($S_t$) measured during the excitation.

9. Method according to either of Claims 7 and 8, **characterized in that** it consists in correcting the measurement of the pressure difference between the chamber (2) and the air according to the difference between the two gains.

**Patentansprüche**

1. Messvorrichtung, die einen Resonator (3) und Mittel zum Messen einer Resonanzfrequenz des Resonators (3) enthält, wobei das Prinzip der Messung darin besteht, die Resonanzfrequenz zu messen, **dadurch gekennzeichnet, dass** sie Mittel enthält, die eine Information (S3) liefern, die den Gütekoeffizienten des Resonators (3) bei der Resonanzfrequenz repräsentiert, wobei die Information (S3) ermöglicht, einen Defekt der Vorrichtung zu erfassen.

2. Vorrichtung nach Anspruch 1, **dadurch gekennzeichnet, dass** sie einen Drucksensor (1) und eine Kammer (2), die auf einem Referenzdruck gehalten wird, enthält, wobei der Drucksensor (1) eine Druckdifferenz zwischen der Kammer (2) und der Luft misst.

3. Vorrichtung nach Anspruch 2, **dadurch gekennzeichnet, dass** die Mittel zum Messen einer Resonanzfrequenz des Resonators Mittel (CAG) zum automatischen Steuern der Amplitude einer Erregungsoszillation (E) des Resonators (3) enthalten und dass ein Verstärkungsfaktor (S3) der automatischen Steuerung (CAG) der Amplitude die Information bildet, die den Gütekoeffizienten des Resonators (3) repräsentiert.

4. Vorrichtung nach einem der vorhergehenden Ansprüche, **dadurch gekennzeichnet, dass** sie Mittel (15) zum Messen der Temperatur enthält.

5. Vorrichtung nach einem der vorhergehenden Ansprüche, **dadurch gekennzeichnet, dass** sie Mittel (14) zum Korrigieren des durch den Drucksensor (1) gemessenen Drucks als Funktion einer Information, die von den Mitteln (CAG) zum Erfassen einer Druckänderung in der Kammer (2) stammen, enthält.

6. Vorrichtung nach Anspruch 1, **dadurch gekennzeichnet, dass** sie Mittel zum Messen einer Beschleunigung enthält.

7. Verfahren zum Verwenden einer Vorrichtung zum Messen des Luftdrucks, die einen Drucksensor (1) und eine Kammer (2), die auf einem Referenzdruck gehalten wird, enthält, wobei der Drucksensor (1) eine Druckdifferenz zwischen der Kammer (2) und der Luft misst und wobei der Drucksensor (1) einen Resonator (3) enthält, der durch eine durch Mittel (CAG) zum automatischen Steuern der Amplitude gesteuerte Oszillation (E) erregt wird, wobei das Messprinzip darin besteht, die Resonanzfrequenz zu messen, **dadurch gekennzeichnet, dass** die Vorrichtung Mittel (CAG) zum Erfassen einer Druckänderung in der Kammer (2) enthält und dass das Verfahren darin besteht, einen ersten Verstärkungsfaktor (S3 gemessen) der automatischen Steuerung der Amplitude der gemessenen Erregung, die bei der Druckmessung gemessen wird, mit einem zweiten Verstärkungsfaktor (S3 berechnet) der automatischen Steuerung der Amplitude der Erregung, die bei der gemessenen Erregungsfrequenz anhand von Parametern berechnet wird, die bei einer Kalibrierung der Vorrichtung definiert werden, zu vergleichen, um einen Defekt der Vorrichtung zu erfassen, wenn die Differenz zwischen den zwei Verstärkungsfaktoren größer als ein gegebener Wert ist.

8. Verfahren nach Anspruch 7, **dadurch gekennzeichnet, dass** die Vorrichtung Mittel (15) zum Messen der Temperatur enthält und dass das Verfahren darin besteht, den zweiten Verstärkungsfaktor (S3 berechnet) als Funktion der Frequenz (Fp) der Erregung (E) und der bei der Erregung gemessenen Temperatur (St) zu berechnen.

9. Verfahren nach einem der Ansprüche 7 oder 8, **dadurch gekennzeichnet, dass** es darin besteht, die Messung der Druckdifferenz zwischen der Kammer (2) und der Luft als Funktion der Differenz zwischen den zwei Verstärkungsfaktoren zu korrigieren.

FIG.1

FIG.2

EP 1 831 663 B1

**EP 1 831 663 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2848298
- FR 2834055
- FR 2687783
- US 6085594 A